# EUROPEAN PATENT SPECIFICATION

(11) **EP 4 144 429 B1**
(45) Date of publication and mention of the grant of the patent: **25.06.2025**
(21) Application number: 22193771.7
(22) Date of filing: 02.09.2022
(51) Int. Cl.: B01D 45/02, B01D 45/06, F01D 25/32

(54) **FLUID LINE SEGMENT FOR GAS TURBINE ENGINE**
FLUIDLEITUNGSSEGMENT FÜR GASTURBINENMOTOR
SEGMENT DE CONDUITE DE FLUIDE POUR MOTEUR À TURBINE À GAZ

(30) Priority: 02.09.2021 US 202117465221
(43) Date of publication of application: 08.03.2023
(73) Proprietor: PRATT & WHITNEY CANADA CORP., Longueuil, Québec J4G 1A1 (CA)
(72) Inventor: GIRARD, Julien, (01BE5) Longueuil, J4G 1A1 (CA)
(74) Representative: Dehns

(56) References cited:
- EP-A1- 2 949 880
- DE-A1- 102005 056 001
- US-A1- 2011 271 739
- US-B1- 10 682 620

## Description

### TECHNICAL FIELD

The application relates generally to gas turbine engines and, more particularly, to pneumatic actuator systems therefore.

### BACKGROUND OF THE ART

Gas turbine engines can have pneumatic actuator systems which use gaseous pressure conveyed by a fluid line. Such fluid lines can have an evacuation passage which can be useful to drain condensation and/or for use as a vent, for instance. If the source of pressurized gas is likely to contain contaminants such as particles for instance, a filter can be used in the fluid line to protect the pneumatic actuator from the contaminants. It can be desired to reduce the weight and size of the filter, but doing so typically affects the filter capacity and may entrain more frequent maintenance, which may be undesired due to factors such as maintenance costs and down time. Accordingly, although former pneumatic actuator system fluid lines have been satisfactory to a certain degree, there always remains room for improvement. DE 10 2005 056001 A1, EP 2 949 880 A1, US 10 682 620 B1 and US 2011/271739 A1 describe arrangements of the prior art.

### SUMMARY

According to an aspect of the present invention, there is provided a fluid line segment as claimed in claim 1.

According to another aspect of the present invention,, there is provided a gas turbine engine as claimed in claim 9.

The following optional features may be applied to either of the above aspects.

Optionally and in accordance with any of the above, the orifice is located at a tip of the projection.

Optionally and in accordance with any of the above, the containment cavity is annular around the projection.

Optionally and in accordance with any of the above, the gas path forms an elbow, the containment cavity extending downwardly from a vertex of the elbow.

Optionally and in accordance with any of the above, wherein the containment cavity, projection and evacuation passage are formed in a component which is selectively removable from the body of the fluid line segment.

Optionally and in accordance with any of the above, the gas turbine engine further comprising a screen extending across the gas path, downstream of the containment cavity.
According to another aspect of the present invention, there is provided a method of operating a fluid line as claimed in claim 14.

### DESCRIPTION OF THE DRAWINGS

Reference is now made to the accompanying figures in which:
Fig.1 is a schematic cross-sectional view of a gas turbine engine;
Figs 2A and 2B are an oblique view and a cross-sectional view, respectively, of a fluid line segment in accordance with an embodiment;
Fig. 3 is a cross-sectional view of a fluid line segment in accordance with another embodiment;
Fig. 4 is a flow chart representing a method of operating a fluid line segment in accordance with an embodiment.

### DETAILED DESCRIPTION

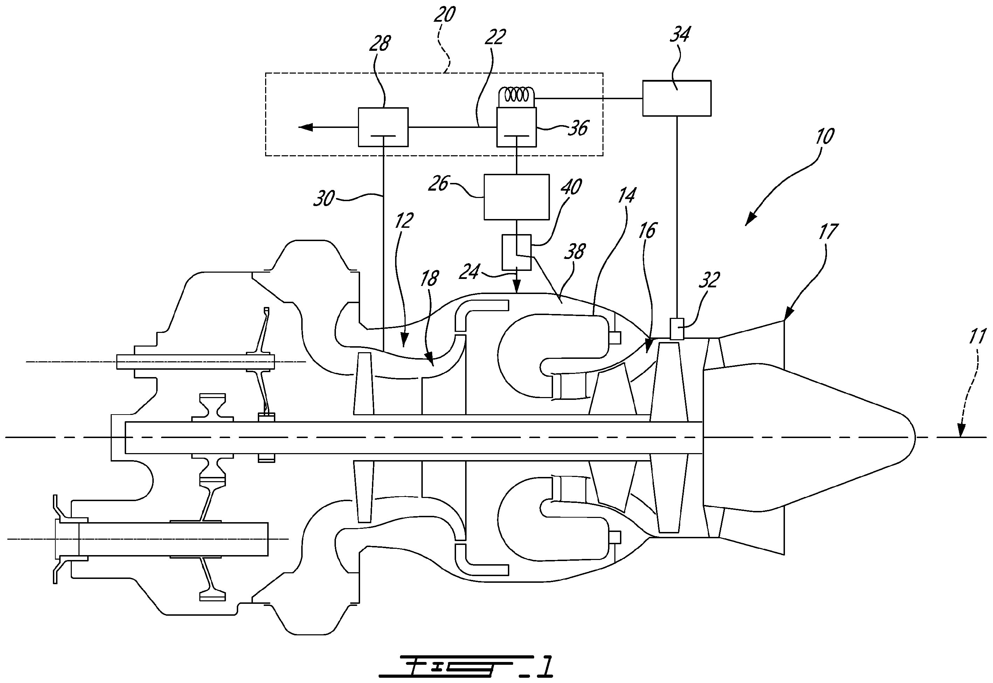

Fig. 1 illustrates an example of a gas turbine engine. In this example, the turbine engine 10 is a turboshaft engine generally comprising in serial flow communication, a multistage compressor 12 for pressurizing the air, a combustor 14 in which the compressed air is mixed with fuel and ignited for generating an annular stream of hot combustion gases around the engine axis 11, and a turbine section 16 for extracting energy from the combustion gases. The turbine engine terminates in an exhaust section 17.

The fluid path extending sequentially across the compressor 12, the combustor 14 and the turbine 16 can be referred to as the main gas path 18. The pressure and temperature of the working fluid typically varies significantly along the main gas path 18. The pressure can be significantly higher immediately downstream of the compressor 12 than immediately upstream of the compressor 12, for instance, and can be even higher between the combustor 14 and the turbine 16, at which point the working fluid can also be particularly hot. In the embodiment shown in Fig. 1, the turboshaft engine 10 has two compressor and turbine stages, including a high pressure stage associated to a high pressure shaft, and a low pressure stage associated to a low pressure shaft, leading to intermediate pressures between compressor stages or between turbine stages. The low pressure shaft can be used as a power source during use.

Gas turbine engines 10 can be equipped with one or more pneumatic actuator system 20. Pneumatic actuator systems can serve various purposes, and typically involve at least one actuator which is driven by gas (typically air) pressure. It can be convenient to use a pneumatic actuator system 20 on a gas turbine engine 10 given the availability of pressurized gas at various pressures from the main gas path 18. The gas pressure can be conveyed between the desired pressurized gas source, which can be a point along the main gas path 18 for instance, to the pneumatic actuator via a fluid line 22. Such fluid lines 22 can have an evacuation passage 24 which can be useful to drain condensation and/or for use as a vent, for instance. If the source of pressurized gas is likely to contain contaminants such as particles, which may be the case when bleeding air pressure from the main gas path 18 of a gas turbine engine 10, a filter 26 can be used in the fluid line 22 to protect the pneumatic actuator from the contaminants. Filters 26 have predetermined contaminant accumulating capacities and need to be changed when they are about to reach that capacity, which can entrain undesired effects such as down time and maintenance costs. Accordingly, on the one hand, one may wish to increase the filter capacity in order to reduce down time and maintenance costs. However, increasing the filter capacity can lead to increasing weight, volume and/or costs of the filter, which may be undesired. There are different types of pneumatic actuator systems 20 which can serve different and various purposes.

In the example embodiment presented in Fig. 1, the gas turbine engine has an example pneumatic actuator system 20 in which the pneumatic actuator is in the form of a piloted valve 28. More specifically, a piloted valve 28 is used to control air flow along a pressure relief line 30, to selectively release or not release air pressure upstream of the combustion chamber 14 based on sensed operating conditions of the gas turbine engine 10. In this specific example, one or more pressure or temperature sensor 32 is used which is connected to a controller 34. Based, potentially amongst other factors, on the sensed temperature or pressure, the controller 34 determines whether the operating conditions satisfy criteria for releasing air pressure or not. If the controller 34 determines that the criteria are met, the controller 34 operates a pilot valve 36, which can be a solenoid valve for instance, and switches the pilot valve 36 to an open condition. The pilot valve 36 can default to the closed condition in the absence of positive control by the controller, for instance. Once in the open condition, pressurized gas is allowed across the pilot valve 36. The pressurized gas then builds pressure in the fluid line 22, between the pilot valve and the pneumatic actuator of the piloted valve 28, and toggles or otherwise activates the actuator of the piloted valve 28 to open the piloted valve 28, which can also be closed by default. When the piloted valve 28 is in the open position, the pressure release line 30 extending between the point along the main gas path 18 where pressure is to be released and the atmosphere can be open, allowing the pressure release.

In the embodiment presented in Fig. 1, it can be suitable for the piloted valve 28 to be supplied with pressurized gas at a relatively high pressure. This need can be satisfied, in this example, by sourcing the pressurized gas from a point 38 along the main gas path 18 commonly referred to as P3 air, downstream of the highest pressure compressor stage, in the vicinity of the combustion chamber 14, from an area which can be referred to herein as the combustor region for simplicity. The high pressure air in this region may contain contaminants such as particles in some operating conditions. To protect the actuator of the piloted valve 28, it can be desired to filter any such contaminants at some point along the fluid line 22. In this embodiment, a filter 26 is present along the fluid line 22 to this end.

Still referring to the example embodiment presented in Fig. 1, it will be understood that in some embodiments, it can be convenient or otherwise useful to provide an evacuation passage 24 to act as a drain and/or a vent as a segment along the length of the fluid line. Such an evacuation passage 24 can be used to evacuate any condensation which may occur in the fluid line, for example, and may also be used as a vent which constantly allows a minor flow of pressurized air circulation for regulation and good function of the fluid line 22. The evacuation passage 24 can be integrated to a fitting conventionally connected to other segments of the fluid line 22, and thus form part of a segment 40 of the fluid line 22, for instance.

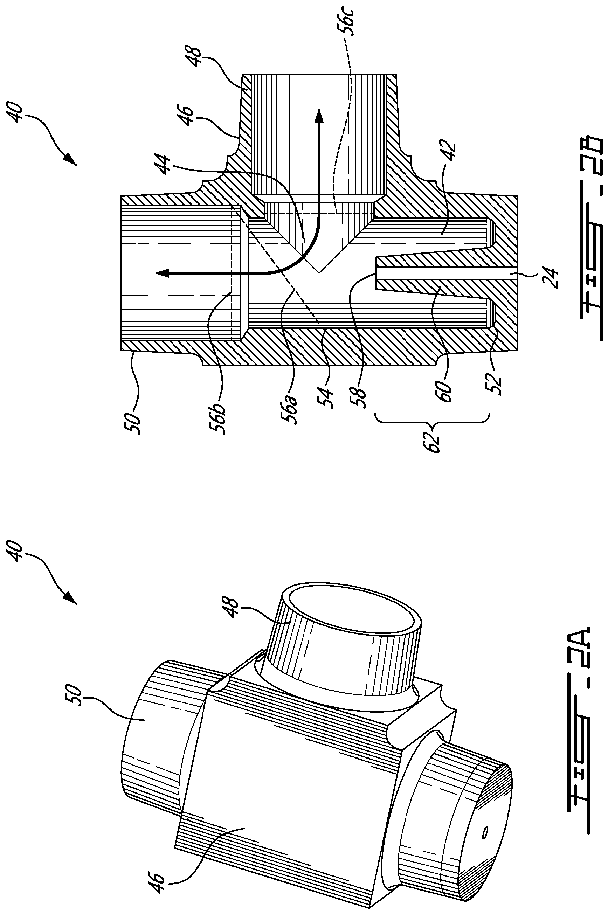

Turning to Fig. 2A and 2B, a first example of such a segment 40 is presented. It was found that providing such a segment with a contaminant containment cavity 42 could be advantageous in some embodiments. In particular, if the segment 40 is provided upstream of the filter 26 and configured to collect at least some of the contaminants which can be expected to travel along the fluid line 22, the segment 40 can reduce the amount of contaminants which will reach the filter 26, and thereby reduce the frequency at which filter maintenance is required in a scenario where all other variables are kept the same.

In the specific example presented in Fig. 2A and 2B, the segment 40 is provided in the form of a fitting defining an L-shaped gas path segment 44 internally to a metallic body 46. The gas path segment 44, which can be referred to as a gas path 44 for short, can extend from an inlet 48 to an outlet 50. Both the inlet 48 and the outlet 50 can incorporate a corresponding connector and be configured for conventional connection to other segments of the fluid line 22.

While gas turbine engines 10 are often used for aircraft propulsion, and aircraft are known to change attitude during flight such as by experimenting roll, pitch and yaw, most aircraft still generally operate within a limited attitude variation envelope relative to gravity, and it can remain convenient to refer to "upward" and "downward" in the context of an aircraft with respect to the most typical orientation of gravity taking into consideration its entire operating envelope.

In the embodiment presented in Fig. 2A and 2B, the containment cavity 42 can thus be said to extend downwardly relative the gas path 44, in the sense that it extends downwardly when the aircraft is grounded for instance, or during the most typical orientation of the force of gravity taking into consideration the entire operating envelope.

The downward orientation of the contaminant containment cavity 42 offers the possibility that relatively dense contaminants such as solid particles settle downwardly into the bottom 52 of the containment cavity under the effect of gravity. Even if there are operating conditions in which this mode of operation does not work because of a change in the orientation of gravity, the embodiment can remain suitable and useful in other operating conditions.

In the specific example illustrated in Figs 2A and 2B, the containment cavity 42 is in fluid communication with the gas path 44, and more specifically with a vertex of an elbow of the gas path 44 where two straight segments meet, and accordingly where a relatively abrupt change of orientation of the pressurized gas circulation can occur. This relatively abrupt change of orientation of the pressurized gas circulation can favor contaminant deposition and collection in the containment cavity 42. Indeed, in this example, contaminant particles carried by the pressurized gas circulation are denser than the pressurized gas and may thus tend to continue travelling horizontally due to inertia as they are carried horizontally from the inlet 48 to impact the far wall 54 of the segment 40 at which point the effect of gravity may be greater than the entraining force of the pressurized gas, leading to settling of the contaminant particles at the bottom 52 of the containment cavity 42. Alternately, if it is more convenient to invert the inlet and outlet in an alternate embodiment, the pressurized gas coming vertically from above before abruptly changing to a horizontal orientation can drive contaminant particles with a sufficient inertia for contaminant particles to be entrained vertically downward by the combined effect of their inertia and gravity and thereby resist the pull of the pressurized gas in horizontal orientation toward the outlet.

In some alternate embodiments, it can be preferred to further mechanically assist the separation of contaminant particles from the pressurized gas flow. For instance, a mesh, screen, membrane, or other element acting somewhat as a filter can be present across the gas path 44 and positioned and configured in such a way to favor collection of contaminant particles with limited effect on pressurized gas circulation. In the context of an embodiment such as presented in Fig. 2B for instance assembled with the horizontal port configured as an inlet, a screen or other filter can be positioned obliquely across the vertex of the elbow or horizontally in the vertical output leg of the segment, for instance, such as illustrated by schematic lines 56a and 56b for instance. In a similar embodiment assembled with the horizontal port configured as an outlet, a screen or other filter can be positioned vertically across the output leg, in close proximity with the elbow, for instance, such as schematized by schematic line 56c for instance. The presence of such a screen or other filter within the segment 40 is optional.

It can be convenient in some embodiments to configure such a fluid line segment 40 in a manner to have an evacuation passage 24 in addition to a containment cavity 42. An evacuation passage 24 can serve to evacuate condensation and/or as a vent, for instance. It can be convenient to combine functionalities into a single fitting having a relatively complex geometry as opposed to providing two separate fittings for different functionalities for example, such as for weight, cost and/or other considerations.

The example presented in Figs. 2A and 2B presents such a configuration where an evacuation passage 24 is integrated to the same fluid line segment 40 which also provides for the containment cavity 42. The evacuation passage 24 leads outside the segment 40 from an orifice 58 which is in fluid flow communication with the gas path 44. In some cases, it may be suitable for the orifice 58 to be positioned at the bottom 52 of the containment cavity, but in others, such as in the one illustrated, it can be considered that positioning the orifice 58 in the bottom 52 of the containment cavity 42 is more likely to lead to clogging of the evacuation passage 24 by the contaminants.

In the example presented in Figs. 2A and 2B, a projection 60 is formed in the containment cavity 42, and more specifically protrudes upwardly from the bottom 52 of the containment cavity 42, towards the gas path 44, and the orifice 58 can be provided in the projection 60 in a manner to be separated from the bottom 52 of the cavity 42 by a separation distance 62. More specifically, in the illustrated embodiment, the projection 60 is somewhat reminiscent of a pillar, is detached from walls of the containment cavity 42 which circumscribe it, and the containment cavity 42 has an annular shape around the projection 60, but these are design choices and other configurations can be preferred in alternate embodiments. In the illustrated embodiment, the orifice 58 is provided at a tip of the projection 60 in a manner to maximize the separation distance 62 for a given projection height. The shape and relative size of the gas passage legs, evacuation passage 24, containment cavity 42 and projection 60 can vary from one embodiment to another and selected as a function of the specific intended context of use.

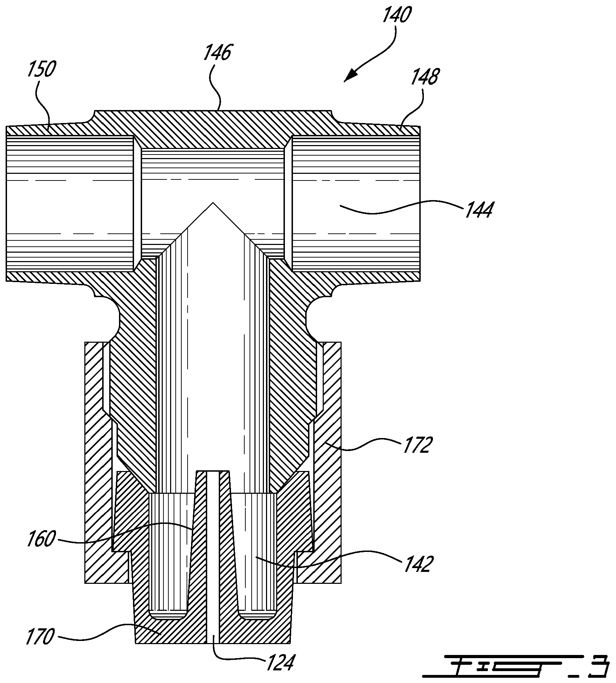

Fig. 3 presents one alternate example of a fluid line segment 140 which incorporates a containment cavity 142 and an evacuation passage 124. The shape and size of the containment cavity 142, projection 160, and evacuation passage 124 presented in this embodiment can be comparable to the corresponding features of the embodiment presented in Fig. 2A and 2B. However, in this alternate example, the fluid line segment 140 is incorporated as a T-shaped fitting where the inlet 148 and the outlet 150 are horizontally opposed to one another at opposite ends of a straight gas path portion, and the containment cavity 142 is provided at the lower end of a vertical passage extending downwardly from an intermediate point along the straight gas path portion. Such a configuration can be suitable in some embodiments, especially in scenarios where the density of the expectable contaminants and the expected velocity of the pressurized gas circulation are such that the contaminants will be expected to be dragged horizontally along the bottom of the gas passage 144 by the pressurized gas until they will become free to fall into the vertical passage into the containment cavity 142. Another distinction with the embodiment presented in Figs. 2A and 2B is that in this embodiment, the containment cavity 142, the projection 160 and the evacuation passage 124 are formed in a component 170 which is distinct from the body 146 of the fluid line segment 140, as opposed to forming part of the same body, and this component 170 can be selectively removed and replaced in a manner to allow emptying the containment cavity 142 of contaminants when desired or found suitable.

In this specific embodiment, the containment cavity 142 can be removably connected to the body 146 of the fluid line segment 140 with a standard conical connector 172, for instance. The T-Fitting can be part of a tubing assembly or be provided with connectors allowing connection with 2 tube ends. In the embodiment presented in Fig. 3 and Fig. 2B, an inlet connector and an outlet connector are present in the form of broadening sections configured to receive tube ends therein. Tube connections can either be brazed, welded or connected using standard conical (nipple) connectors. In some embodiments, connectors which provide for selective removal and replacement of the containment cavity from the fluid line segment, or for selective removal and replacement of the fluid line segment from the fluid line can be preferred as this functionality can be used for cleaning of the fluid line segment. In a T-shaped configuration, if a screen or other filter is used, it can extend vertically across the outlet leg, immediately downstream of the vertex, or diagonally across the vertex for instance.

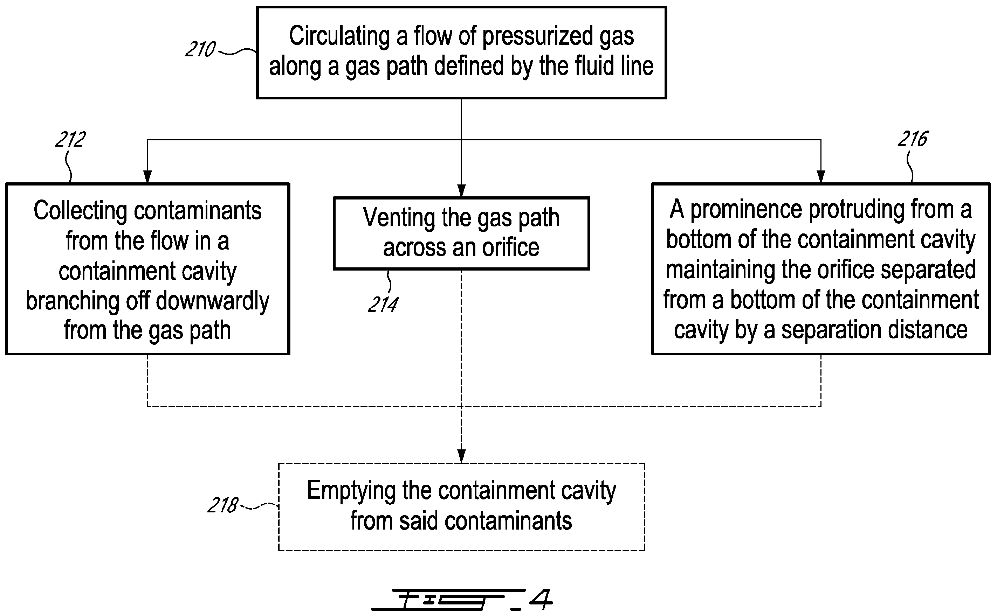

During operation of the gas turbine engine, such as shown in Fig. 4, a flow of pressurized gas can be circulated 210 along a gas path defined by the fluid line. The circulation of pressurized gas can entrain contaminants. During the circulation, contaminants can be collected 212 from the flow in a containment cavity branching off downwardly from the gas path; the gas path can be vented 214 across an orifice; and the orifice can be maintained separated 216 from a bottom of the containment cavity by a projection. After a certain amount of contaminants has been collected, such as after a certain amount of flight time, the containment cavity can be disassembled from the line, emptied 218 of contaminants, and reassembled.

## Claims

1. A fluid line segment (40;140) comprising:
a body (46;146) having an inlet (48;148), an outlet (50;150), and a gas path (44) extending between the inlet (48;148) and the outlet (50;150);
a containment cavity (42;142) extending between the gas path (44) and a cavity bottom (52) of the containment cavity (42;142), the containment cavity(42;142) in fluid communication with the gas path (44);
a projection protruding from the cavity bottom (52) of the containment cavity (42;142) towards the gas path (44);
an orifice (58) defined in the projection (60;160); and
an evacuation passage (24;124) extending from the orifice (58), across the projection (60;160) and leading outside the body (46;146), the evacuation passage (24) being in fluid communication with the containment cavity (42;142) and the gas path (44) via the orifice (58).

2. The fluid line segment (40;140) of claim 1, wherein the orifice (58) is located at a tip of the projection (60;160).

3. The fluid line segment (40;140) of claims 1 or 2, wherein the containment cavity (42;142) is annular around the projection (60;160).

4. The fluid line segment (40;140) of any preceding claim, wherein the containment cavity (42;142), projection (60;160) and evacuation passage (24) are formed in a component which is selectively removable from the body (46;146) of the fluid line segment.

5. The fluid line segment (40;140) of any preceding claim, further comprising a screen extending across the gas path (44), downstream of the containment cavity (42; 142).

6. The fluid line segment (140) of any of preceding claim, wherein the gas path (44) extends straight between the inlet (148) and the outlet (150), and the containment cavity (142) branches off transversally from the gas path (44).

7. The fluid line segment (40) of any of claims 1 to 5, wherein the gas path (44) forms an elbow, the containment cavity (42) extending downwardly from a vertex of the elbow.

8. The fluid line segment (40;140) of any preceding claim, forming a fitting including an inlet connector at the inlet (48;148) and an outlet connector at the outlet (50;150).

9. A gas turbine engine (10) comprising :
a main gas path (18) extending sequentially across a compressor (12), a combustor (14) region and a turbine (16);
a pneumatic actuator (20); and
a fluid line (22) extending between the main gas path (18) and the pneumatic actuator (20), the fluid line (22) comprising the fluid line segment (40;140) of any preceding claim, wherein the projection protrudes upwardly from the cavity bottom.

10. The gas turbine engine (10) of claim 9, wherein the fluid line (22) extends from the combustor (14) region of the main gas path (18).

11. The gas turbine engine (10) of claim 9 or 10,wherein the pneumatic actuator (20) is a valve actuator of a valve (28) configured for controlling the flow of a pressure relief line (30) fluidly connecting the main gas path (18) to the environment.

12. The gas turbine engine (10) of any of claims 9 to 11, further comprising a pilot valve (36) controlling the flow along the fluid line (22).

13. The gas turbine engine (10) of any of claims 9 to 12, wherein the fluid line (22) comprises a filter (26) located downstream of the fluid line segment (40;140).

14. A method of operating a fluid line (22) comprising the fluid line segment (40;140) of any of claims 1 to 8, the method comprising, simultaneously :
circulating (210) a flow of pressurized gas along the gas path (44);
collecting (212) contaminants from the flow in the containment cavity (42;142), the containment cavity (42;142) branching off downwardly from the gas path (44); and
venting (214) the gas path (44) across the orifice (58),
the projection (60;160) maintaining the orifice (58) separated from the bottom (52) of the containment cavity (42;142) by a separation distance (216).

15. The method of claim 14, further comprising, subsequently to said collecting contaminants, emptying (218) the containment cavity (42;142) from said contaminants.

## Patentansprüche

1. Fluidleitungssegment (40; 140), umfassend:
einen Körper (46; 146), der einen Einlass (48; 148), einen Auslass (50; 150) und einen Gasweg (44) aufweist, der sich zwischen dem Einlass (48; 148) und dem Auslass (50; 150) erstreckt;
einen Einschlusshohlraum (42; 142), der sich zwischen dem Gasweg (44) und einem Hohlraumboden (52) des Einschlusshohlraums (42; 142) erstreckt, wobei der Einschlusshohlraum (42; 142) in Fluidverbindung mit dem Gasweg (44) steht;
einen Vorsprung, der von dem Hohlraumboden (52) des Einschlusshohlraums (42; 142) in Richtung des Gaswegs (44) vorsteht;
eine Öffnung (58), die in dem Vorsprung (60; 160) definiert ist; und
einen Evakuierungskanal (24; 124), der sich von der Öffnung (58) über den Vorsprung (60; 160) erstreckt und aus dem Körper (46; 146) herausführt, wobei der Evakuierungskanal (24) über die Öffnung (58) in Fluidverbindung mit dem Einschlusshohlraum (42; 142) und dem Gasweg (44) steht.

2. Fluidleitungssegment (40; 140) nach Anspruch 1, wobei sich die Öffnung (58) an einer Spitze des Vorsprungs (60; 160) befindet.

3. Fluidleitungssegment (40; 140) nach Anspruch 1 oder 2, wobei der Einschlusshohlraum (42; 142) ringförmig um den Vorsprung (60; 160) herum verläuft.

4. Fluidleitungssegment (40; 140) nach einem der vorhergehenden Ansprüche, wobei der Einschlusshohlraum (42; 142), der Vorsprung (60; 160) und der Evakuierungskanal (24) in einer Komponente ausgebildet sind, die selektiv von dem Körper (46; 146) des Fluidleitungssegments entfernbar ist.

5. Fluidleitungssegment (40; 140) nach einem der vorhergehenden Ansprüche, ferner umfassend ein Sieb, das sich stromabwärts des Einschlusshohlraums (42; 142) über den Gasweg (44) erstreckt.

6. Fluidleitungssegment (140) nach einem der vorhergehenden Ansprüche, wobei sich der Gasweg (44) gerade zwischen dem Einlass (148) und dem Auslass (150) erstreckt und der Einschlusshohlraum (142) quer von dem Gasweg (44) abzweigt.

7. Fluidleitungssegment (40) nach einem der Ansprüche 1 bis 5, wobei der Gasweg (44) einen Bogen bildet, wobei sich der Einschlusshohlraum (42) von einem Scheitelpunkt des Bogens nach unten erstreckt.

8. Fluidleitungssegment (40; 140) nach einem der vorhergehenden Ansprüche, das ein Anschlussstück bildet, das einen Einlassverbinder an dem Einlass (48; 148) und einen Auslassverbinder an dem Auslass (50; 150) beinhaltet.

9. Gasturbinenmotor (10), umfassend:
einen Hauptgasweg (18), der sich nacheinander über einen Kompressor (12), einen Bereich einer Brennkammer (14) und eine Turbine (16) erstreckt;
einen pneumatischen Aktuator (20); und
eine Fluidleitung (22), die sich zwischen dem Hauptgasweg (18) und dem pneumatischen Aktuator (20) erstreckt, wobei die Fluidleitung (22) das Fluidleitungssegment (40; 140) nach einem der vorhergehenden Ansprüche umfasst, wobei der Vorsprung von dem Hohlraumboden nach oben vorsteht.

10. Gasturbinenmotor (10) nach Anspruch 9, wobei sich die Fluidleitung (22) von dem Bereich der Brennkammer (14) des Hauptgaswegs (18) erstreckt.

11. Gasturbinenmotor (10) nach Anspruch 9 oder 10, wobei der pneumatische Aktuator (20) ein Ventilaktuator eines Ventils (28) ist, das zum Steuern des Stroms in einer Druckentlastungsleitung (30) konfiguriert ist, die den Hauptgasweg (18) fluidisch mit der Umgebung verbindet.

12. Gasturbinenmotor (10) nach einem der Ansprüche 9 bis 11, ferner umfassend ein Pilotventil (36), das den Strom entlang der Fluidleitung (22) steuert.

13. Gasturbinenmotor (10) nach einem der Ansprüche 9 bis 12, wobei die Fluidleitung (22) ein Filter (26) umfasst, das sich stromabwärts des Fluidleitungsabschnitts (40; 140) befindet.

14. Verfahren zum Betreiben einer Fluidleitung (22), die das Fluidleitungssegment (40; 140) nach einem der Ansprüche 1 bis 8 umfasst, wobei das Verfahren gleichzeitig Folgendes umfasst:
Zirkulieren (210) eines Stroms von Druckgas entlang des Gaswegs (44);
Sammeln (212) von Verunreinigungen aus dem Strom in dem Einschlusshohlraum (42; 142), wobei der Einschlusshohlraum (42; 142) nach unten von dem Gasweg (44) abzweigt; und
Entlüften (214) des Gasweges (44) über die Öffnung (58),
wobei der Vorsprung (60; 160) die Öffnung (58) durch einen Trennabstand (216) von dem Boden (52) des Einschlusshohlraums (42; 142) getrennt hält.

15. Verfahren nach Anspruch 14, ferner umfassend Entleeren (218) der Verunreinigungen aus dem Einschlusshohlraum (42; 142) im Anschluss an das Sammeln von Verunreinigungen.

## Revendications

1. Un segment de conduite de fluide (40;140) comprenant :
un corps (46;146) ayant une entrée (48;148), une sortie (50;150), et un trajet de gaz (44) se prolongeant entre l'entrée (48;148) et la sortie (50;150) ;
une cavité de confinement (42;142) se prolongeant entre le trajet de gaz (44) et le fond de cavité (52) de la cavité de confinement (42;142), la cavité de confinement (42;142) étant en communication fluide avec le trajet de gaz (44) ;
une projection saillante du fond de cavité (52) de la cavité de confinement (42;142) vers le trajet de gaz (44) ;
un orifice (58) défini dans la projection (60;160) ; et
un passage d'évacuation (24;124) se prolongeant depuis l'orifice (58), à travers la projection (60;160) et menant à l'extérieur du corps (46;146), le passage d'évacuation (24) étant en communication fluide avec la cavité de confinement (42;142) et le trajet de gaz (44) via l'orifice (58).

2. Le segment de conduite de fluide (40;140) conformément à la revendication 1, selon laquelle l'orifice (58) est situé à l'extrémité de la projection (60;160).

3. Le segment de conduite de fluide (40;140) conformément aux revendications 1 ou 2, selon lesquelles la cavité de confinement (42;142) est annulaire autour de la projection (60;160).

4. Le segment de conduite de fluide (40;140) conformément à l'une quelconque des revendications précédentes, selon laquelle la cavité de confinement (42;142), la projection (60;160) et le passage d'évacuation (24) sont agencés dans un composant qui est sélectivement amovible du corps (46;146) du segment de conduite de fluide.

5. Le segment de conduite de fluide (40;140) conformément à l'une quelconque des revendications précédentes, comprenant également un écran se prolongeant à travers le trajet de gaz (44), en aval de la cavité de confinement (42;142).

6. Le segment de conduite de fluide (140) conformément à l'une quelconque des revendications précédentes, selon lequel le trajet de gaz (44) se prolonge de manière rectiligne entre l'entrée (148) et la sortie (150), et la cavité de confinement (142) se ramifie transversalement depuis le trajet de gaz (44).

7. Le segment de conduite de fluide (40) conformément à l'une quelconque des revendications 1 à 5, selon laquelle le trajet de gaz (44) forme un coude, la cavité de confinement (42) se prolongeant vers le bas depuis le sommet du coude.

8. Le segment de conduite de fluide (40;140) conformément à l'une quelconque des revendications précédentes, formant un raccord comprenant un connecteur d'entrée à l'entrée (48;148) et un connecteur de sortie à la sortie (50;150).

9. Un moteur à turbine à gaz (10) comprenant :
un trajet de gaz principal (18) se prolongeant successivement à travers un compresseur (12), une région de chambre de combustion (14) et une turbine (16) ;
un actionneur pneumatique (20) ; et
une conduite de fluide (22) se prolongeant entre le trajet de gaz principal (18) et l'actionneur pneumatique (20), la conduite de fluide (22) comprenant le segment de conduite de fluide (40;140) conformément à l'une quelconque des revendications précédentes, selon laquelle la projection se prolonge vers le haut depuis le fond de la cavité.

10. Le moteur à turbine à gaz (10) conformément à la revendication 9, selon laquelle la conduite de fluide (22) se prolonge depuis la région de la chambre de combustion (14) du trajet de gaz principal (18).

11. Le moteur à turbine à gaz (10) conformément à la revendication 9 ou 10, selon laquelle l'actionneur pneumatique (20) est un actionneur de vanne d'une vanne (28) configurée pour contrôler le flux d'une ligne de décompression (30) connectant fluidiquement le trajet de gaz principal (18) à l'environnement.

12. Le moteur à turbine à gaz (10) conformément à l'une quelconque des revendications 9 à 11, comprenant également une vanne pilote (36) contrôlant le flux le long de la conduite de fluide (22).

13. Le moteur à turbine à gaz (10) conformément à l'une quelconque des revendications 9 à 12, selon laquelle la conduite de fluide (22) comprend un filtre (26) situé en aval du segment de conduite de fluide (40;140).

14. Un procédé d'exploitation d'une conduite de fluide (22) comprenant le segment de conduite de fluide (40;140) de l'une quelconque des revendications 1 à 8, le procédé comprenant, simultanément :
la circulation (210) d'un flux de gaz sous pression le long du trajet de gaz (44) ;
la collecte (212) de contaminants provenant du flux dans la cavité de confinement (42;142), la cavité de confinement (42;142) se ramifiant vers le bas depuis le trajet de gaz (44) ; et
l'évacuation (214) du trajet de gaz (44) à travers l'orifice (58),
la projection (60;160) maintenant l'orifice (58) séparé du fond (52) de la cavité de confinement (42;142) par une distance de séparation (216).

15. Le procédé selon la revendication 14, comprenant également, après ladite collecte des contaminants, la vidange (218) de la cavité de confinement (42;142) desdits contaminants.
